# EUROPÄISCHE PATENTSCHRIFT

(11) **EP 3 144 099 B1**
(45) Veröffentlichungstag und Bekanntmachung des Hinweises auf die Patenterteilung: **12.09.2018**
(21) Anmeldenummer: 16180545.2
(22) Anmeldetag: 21.07.2016
(51) Int. Cl.: B23Q 11/00

(54) **EINSATZ FÜR EINE BOHRMASCHINE**
INSERT FOR A DRILLING MACHINE
INSERT POUR PERCEUSE

(30) Priorität: 17.09.2015 AT 507942015
(43) Veröffentlichungstag der Anmeldung: 22.03.2017
(73) Patentinhaber: Tyrolit - Schleifmittelwerke Swarovski K.G., 6130 Schwaz (AT)
(72) Erfinder: LAUTERER, Siegfried, 6200 Jenbach (AT)
(74) Vertreter: Torggler & Hofinger Patentanwälte

(56) Entgegenhaltungen:
- DE-A1- 2 913 501
- DE-A1- 3 841 871

## Beschreibung

Die Erfindung betriff einen Einsatz für eine Bohrmaschine mit: einem Befestigungsmittel zur Befestigung des Einsatzes an der Bohrmaschine, wenigstens einem Luftkanal, der durch Befestigung des Einsatzes an der Bohrmaschine in Fluidverbindung mit wenigstens einem luftführenden Abschnitt der Bohrmaschine bringbar ist und wenigstens einem Anschlag für einen Bohrkern oder Teile eines Bohrkerns. Die Erfindung betrifft weiterhin eine Bohrmaschine umfassend einen erfindungsgemäßen Einsatz.
Insbesondere zum Kernbohren von armiertem Beton werden Hohlbohrer eingesetzt. Zur Kühlung dieser Hohlbohrer kann es vorgesehen sein, diese mit Kühlwasser zu durchströmen. In einigen Fällen, z.B. beim Rückbau von Kernkraftwerken, beim Bohren in Räumen mit sensibler Einrichtung (z.B. EDV), ist der Einsatz von Kühlwasser jedoch unerwünscht und unter Umständen sogar ausgeschlossen. In diesen Fällen werden die Hohlbohrer im Trockenbohrverfahren verwendet. Im Bereich der Aufnahme des Hohlbohrers ist dann eine Absaugvorrichtung, z.B. in Form eines Industriestaubsaugers, angeschlossen, über welche der Bohrabrieb entfernt wird. Gleichzeitig kommt es durch die Absaugung zu einem Kühleffekt, der eine Überhitzung der an dem Hohlbohrer angeordneten Bohrsegmente verhindert.
Bei den aus dem Stand der Technik bekannten Einsätzen für eine Bohrmaschine gemäß dem Oberbegriff des Anspruchs 1, wie sie z.B. aus der DE 38 41 871 A1 und der WO 03/103888 bekannt sind, kann es vorkommen, dass der Bohrkern von der Absaugung angesaugt wird und die Absaugöffnung im Bohradapter verschließt. Dadurch fällt die Luftkühlung aus und die Bohrsegmente überhitzen. In weiterer Folge schmiert die Metallbindung auf und die Diamanten werden in die Bindung eingedrückt oder durch die Hitze zerstört.
Die DE 29 13 501 A1 zeigt beispielsweise einen Hohlbohrer mit einem Schaft, einem Befestigungsmittel zur Befestigung an einer Bohrmaschine und mehreren mit einem Staubsauger beaufschlagbaren Luftkanälen zur Absaugung von Bohrmehl.
Ein weiterer Hohlbohrer geht aus der DE 38 41 871 A1 hervor, welcher mit einem Zwischenstück verbindbar ist. Dieses Zwischenstück weist ein mit einer Unterdruckquelle beaufschlagbares, zentrales Sackbohrloch zur Absaugung von Bohrklein auf.

Die Aufgabe der vorliegenden Erfindung besteht somit darin, den Einsatz für eine Bohrmaschine derart zu modifizieren, dass ein solcher Verschluss der Absaugöffnung im Bohradapter durch den Bohrkern und damit ein Ausfall der Luftkühlung nicht mehr möglich ist. Eine weitere Aufgabe besteht darin, eine Bohrmaschine anzugeben, der sich die Vorteile des gegenüber dem Stand der Technik verbesserten Einsatzes zunutze macht.

Diese Aufgaben werden durch die Merkmale der unabhängigen Ansprüche 1 und 9 gelöst.

Demzufolge ist es bei dem erfindungsgemäßen Einsatz vorgesehen, dass der wenigstens eine Luftkanal mit wenigstens einer Lufteintrittsöffnung zur unmittelbaren Aufnahme von Bohrabrieb, welcher bei der Verwendung der Bohrmaschine mit einem Hohlbohrer auftritt, verbunden ist, wobei die wenigstens eine Lufteintrittsöffnung schräg zur Längsachse des Einsatzes ausgerichtet ist, sodass immer ein Spalt vorhanden ist, über welchen Luft aus dem Bereich des Hohlbohrers angesaugt werden kann. Dadurch kann nicht mehr der Fall eintreten, dass der Bohrkern mit einer seiner Stirnflächen die wenigstens eine Lufteintrittsöffnung komplett verschließt. Die Größe des Spalts hängt von der Schrägstellung der Lufteintrittsöffnung relativ zur Längsachse des Einsatzes ab.

Das Merkmal "schräg zur Längsachse des Einsatzes" ist in diesem Zusammenhang dahingehend auszulegen, dass die Längsachse bzw. eine parallel dazu ausgerichtete Gerade nicht normal zur wenigstens einen Lufteintrittsöffnung orientiert ist. Grundsätzlich sind in diesem Zusammenhang zwei Konfigurationen denkbar, nämlich zum einen, dass eine normal zur wenigstens einen Lufteintrittsöffnung ausgerichtete Gerade die Längsachse des Einsatzes schneidet, oder zum anderen windschief zu dieser angeordnet ist. Eine Situation, bei welcher eine normal zur wenigstens einen Lufteintrittsöffnung ausgerichtete Gerade parallel zur Längsachse des Einsatzes ausgerichtet ist, ist also gerade nicht gewünscht. Für den Fall, dass eine normal zur wenigstens einen Lufteintrittsöffnung ausgerichtete Gerade die Längsachse des Einsatzes schneidet, ist grundsätzlich jeder Winkel größer Null Grad vorstellbar. Gemäß bevorzugten Ausführungsformen liegen Winkel von im Wesentlichen 60° oder 90° vor. Es sind auch Ausführungsformen des Einsatzes von der vorliegenden Erfindung erfasst mit wenigstens einer ersten Lufteintrittsöffnung und wenigstens einer zweiten Lufteintrittsöffnung, wobei eine normal zur wenigstens einen ersten Lufteintrittsöffnung ausgerichtete Gerade die Längsachse des Einsatzes schneidet und eine normal zur wenigstens einen zweiten Lufteintrittsöffnung ausgerichtete Gerade windschief zur Längsachse des Einsatzes angeordnet ist.

Wie eingangs ausgeführt wird Schutz auch begehrt für eine Bohrmaschine mit wenigstens einem luftführenden Abschnitt, einem erfindungsgemäßen Einsatz sowie einem zum Befestigungsmittel des Einsatzes korrespondierenden Gegenbefestigungsmittel.

Weitere vorteilhafte Ausführungsformen der Erfindung sind in den abhängigen Ansprüchen 2 bis 8 sowie 10 bis 12 definiert.

Weitere Einzelheiten und Vorteile der vorliegenden Erfindung werden anhand der Figurenbeschreibung unter Bezugnahme auf die Zeichnungen im Folgenden näher erläutert. Darin zeigt:
- Fig. 1a: eine schematisch dargestellte Anordnung aus einer Bohrmaschine mit einem Hohlbohrer;
- Fig. 1b: die Anordnung gemäß Figur 1a mit einem im Hohlbohrer angeordneten Bohrkern, welcher derart an dem Bohradapter anliegt, dass die Luftkühlung unterbrochen ist;
- Fig. 1c: die Anordnung gemäß Figur 1b, diesmal mit einem erfindungsgemäßen Einsatz, durch den eine Unterbrechung der Luftkühlung vermieden wird;
- Fig. 2a: eine erste vorteilhafte Ausführungsform eines Einsatzes in einer schematisch dargestellten perspektivischen Ansicht;
- Fig. 2b: den Einsatz aus der Figur 2a bei einer Draufsicht auf die Spitze;
- Fig. 2c: den Einsatz gemäß Figur 2a bei einer im Vergleich zur Figur 2b entgegengesetzten Blickrichtung;
- Fig. 2d: eine Seitenansicht des Einsatzes gemäß Figur 2a;
- Fig. 2e: eine Querschnittsdarstellung des Einsatzes gemäß Figur 2d entlang der Schnittebene 27;
- Fig. 3: ein zweites bevorzugtes Ausführungsbeispiel des Einsatzes und
- Fig. 4: ein drittes bevorzugtes Ausführungsbeispiel des Einsatzes.

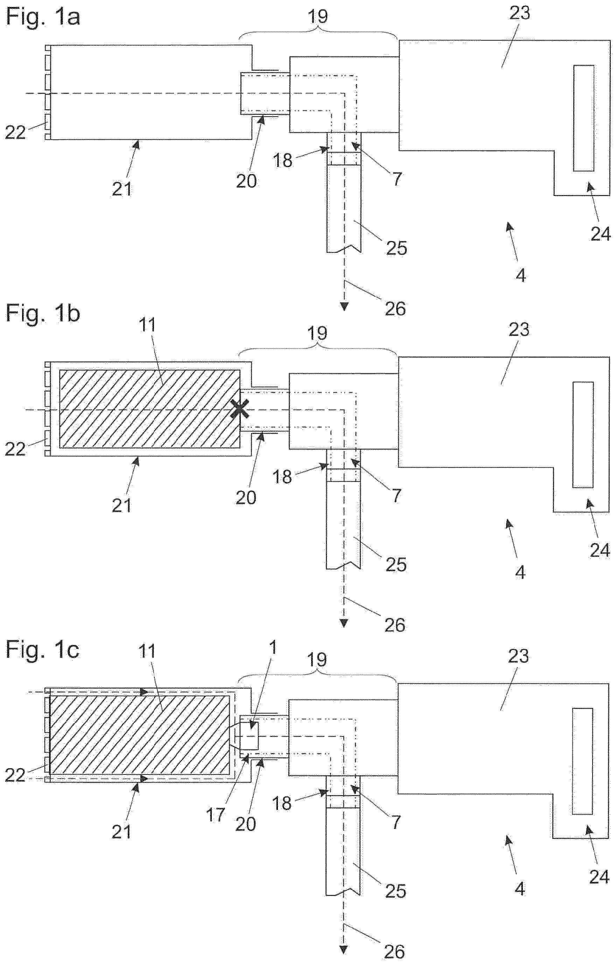

Figur 1a zeigt schematisch eine Bohrmaschine 4 mit einer in einem Gehäuse 23 angeordneten Antriebseinheit, wobei das Gehäuse 23 einen Griffabschnitt 24 aufweist. Am dem Griffabschnitt 24 gegenüberliegenden Ende der Bohrmaschine 4 ist ein Bohradapter 19 angeordnet, der lösbar mit der Bohrmaschine 4 verbindbar ist. In dem Bohradapter 19 ist ein luftführender Abschnitt 7 ausgebildet, der einerseits zu einem am Bohradapter 19 anordenbaren Hohlbohrer 21 geöffnet ist und andererseits in Fluidverbindung mit einem Anschluss 18 für eine Absaugvorrichtung steht. Die Absaugvorrichtung kann dabei mit dem Anschluss 18 über ein geeignetes Verbindungsmittel 25, z.B. einen Schlauch, verbunden werden. Wenn die Absaugvorrichtung tätig ist, wird ein Luftfluss erzeugt, der in der Figur 1a mittels eines gestrichelten Pfeils 26 angedeutet ist.

Der Bohradapter 19 weist ein Befestigungsmittel 20 für einen Hohlbohrer 21 auf, beispielsweise in Form eines Außengewindes. Alternativ könnte auch ein Bajonettverschluss oder dergleichen zum Einsatz kommen. Über korrespondierende Befestigungsmittel, z.B. ein Innengewinde, kann ein Hohlbohrer 21 an dem Bohradapter 19 befestigt werden. Die Hohlbohrer 21 können unterschiedliche Durchmesser aufweisen. Grundsätzlich bestehen sie im Wesentlichen aus einem Hohlzylinder, an dessen stirnseitigem Rand Schneidsegmente 22 angeordnet sind.

Bei herkömmlichen Bohrmaschinen 4 kann es nun im Zuge des Bohrfortschritts vorkommen, dass ein Bohrkern 11 bricht und Teile des Bohrkerns von der Absaugung angesaugt werden und die Absaugöffnung im Bohradapter 19 verschließen, was in der Figur 1b durch ein Kreuz angedeutet ist. Diese Unterbrechung der Luftkühlung wird im Wesentlichen dadurch hervorgerufen, dass die Absaugöffnung im Bohradapter 19 im Wesentlichen parallel zu den Stirnseiten des Bohrkerns 11 orientiert ist.

Um eine solche Unterbrechung der Luftkühlung bzw. Unterbrechung des Abtransports von Bohrabrieb zu verhindern, sieht die vorliegende Erfindung vor, an der Bohrmaschine 4 einen Einsatz 1 zu befestigen, der wenigstens einen Luftkanal aufweist, wobei durch die Befestigung des Einsatzes 1 an der Bohrmaschine 4 der Luftkanal in Fluidverbindung mit dem luftführenden Abschnitt 7 der Bohrmaschine 4 bringbar ist.

Der Einsatz 1 weist einen Anschlag für den Bohrkern 11 auf, sowie wenigstens eine Lufteintrittsöffnung mit welcher der Luftkanal verbunden ist, wobei die Lufteintrittsöffnung schräg zur Längsachse des Einsatzes 1 ausgerichtet ist. Durch diese Maßnahmen wird ein Luftfluss 26 ermöglicht, wie er in der Figur 1c mittels gestrichelter Pfeile 26 dargestellt ist.

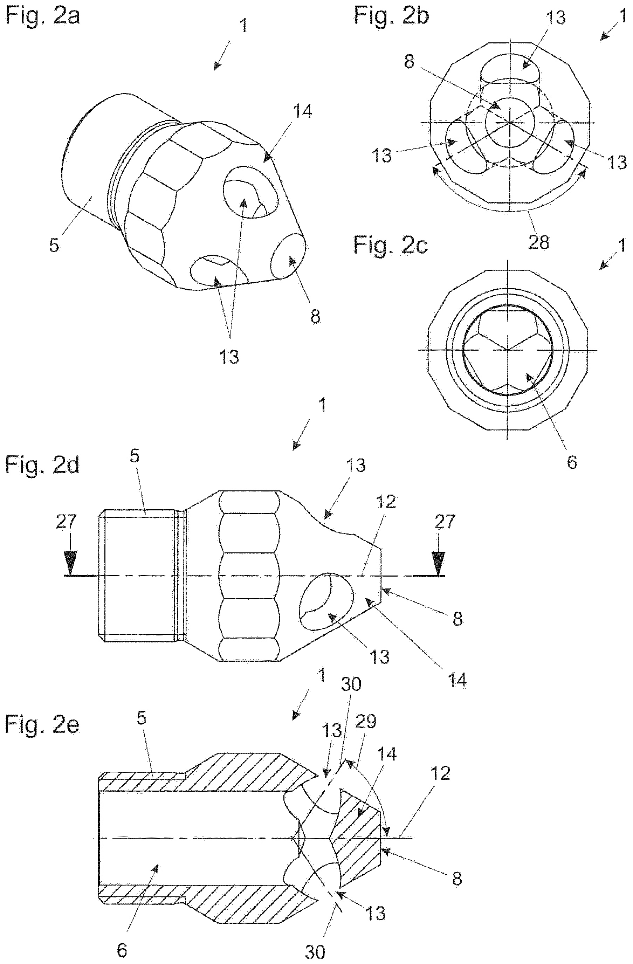

Die Figuren 2a bis 2e zeigen ein erstes bevorzugtes Ausführungsbeispiel eines solchen Einsatzes 1. Der Einsatz 1 weist einen zylinderförmigen und einen kegelstumpfförmigen Abschnitt auf. Im Bereich des zylindrischen Abschnitts ist ein Befestigungsmittel 5 in Form eines Außengewindes angeordnet, über welches der Einsatz 1 über ein korrespondierendes Gegenbefestigungsmittel 17 (vergl. Figur 1c) in Form eines Innengewindes mit dem Bohradapter 19 der Bohrmaschine 4 lösbar verbindbar ist. Im Inneren des Einsatzes 1 ist ein Luftkanal 6 ausgebildet (vergl. insbesondere Figur 2e). Der Luftkanal verläuft bereichsweise koaxial zur Längsachse 12 des Einsatzes 1. Der Luftkanal 6 ist im vorliegenden Fall mit drei Lufteintrittsöffnungen 13 verbunden, welche schräg zur Längsachse 12 des Einsatzes 1 ausgerichtet sind. Eine normal zu einer dieser Lufteintrittsöffnungen 13 ausgerichtete Gerade 30 schneidet die Längsachse 12 des Einsatzes 1. Der Schnittwinkel 29 beträgt im vorliegenden Fall im Wesentlichen 60°.

Betrachtet man den Einsatz 1 in einer Draufsicht auf den Anschlag 8 (vergl. Figur 2b), so wird ersichtlich, dass die drei Lufteintrittsöffnungen 13 symmetrisch um die Längsachse 12 des Einsatzes 1 angeordnet sind. Der Versatz 28 zwischen zwei benachbarten Lufteintrittsöffnungen 13 beträgt im Wesentlichen 120°.

Beim Einsatz 1 ist der Anschlag 8 im Wesentlichen in Form einer Fläche ausgebildet, wobei die Fläche im Wesentlichen normal zur Längsachse 12 des Einsatzes 1 ausgerichtet ist. Weiterhin ist der Anschlag 8 an einem Träger 14 ausgebildet, wobei in diesem Träger 14 der Luftkanal 6, zumindest bereichsweise, ausgebildet ist. Der Träger 14 wird im vorliegenden Fall im Wesentlichen durch den kegelstumpfförmigen Abschnitt gebildet.

Die Gesamtlänge in Längsrichtung 12 des Einsatzes 1 beträgt ca. 50 Millimeter.

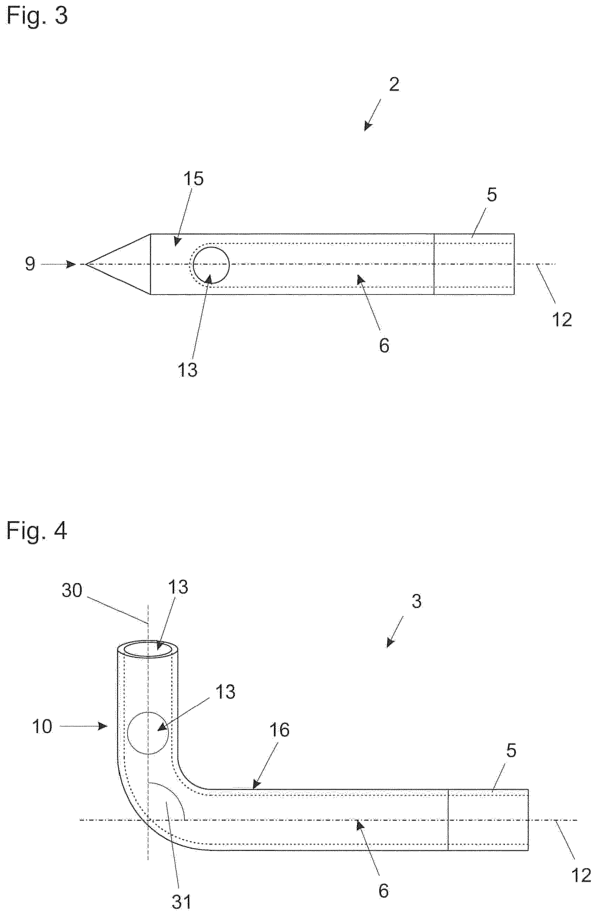

In der Figur 3 ist schematisch ein zweites besonders bevorzugtes Ausführungsbeispiel eines Einsatzes 2 dargestellt. Dieser Einsatz 2 besteht im Wesentlichen aus einem zylindrischen Abschnitt, wobei an einem Ende dieses Abschnitts ein Befestigungsmittel 5 zur Befestigung des Einsatzes 2 an der Bohrmaschine 4 ausgebildet ist. Am gegenüberliegenden Ende ist ein Anschlag 9 für einen Bohrkern 11 oder Teile eines Bohrkerns angeordnet. In diesem Fall ist der Anschlag 9 im Wesentlichen punktförmig als Spitze eines auf den zylindrischen Abschnitt aufgesetzten Kegels ausgebildet. Der Kegel kann einstückig mit dem zylindrischen Abschnitt ausgebildet sein.

Koaxial zur Längsachse 12 des Einsatzes 2 verläuft im Inneren des Einsatzes 2 ein Luftkanal 6, der mit einer Lufteintrittsöffnung 13 verbunden ist, welche schräg zur Längsachse 12 des Einsatzes 2 ausgerichtet ist. Eine normal zur Lufteintrittsöffnung 13 ausgerichtete Gerade, die in die Bildebene hinein- bzw. herausverläuft, schneidet die Längsachse 12 des Einsatzes 2. Der Schnittwinkel beträgt im Wesentlichen 90°.

Der zylindrische Abschnitt stellt gleichzeitig einen Träger 15 für den Anschlag 9 dar, wobei in dem Träger der Luftkanal 6 bereichsweise ausgebildet ist.

Figur 4 zeigt schematisch ein drittes besonders bevorzugtes Ausführungsbeispiel eines Einsatzes 3. Der Einsatz 3 weist ebenfalls einen zylindrischen Abschnitt auf, an dessen einen Ende ein Befestigungsmittel 5 zur Befestigung des Einsatzes 3 an der Bohrmaschine 4 vorgesehen ist. Das gegenüberliegende Ende ist abgewinkelt. Im Wesentlichen handelt es sich also um einen abgewinkelten Hohlzylinder. Dieser weist zwei Lufteintrittsöffnungen 13 auf, wobei eine der Lufteintrittsöffnungen an der Stirnseite des Hohlzylinders ausgebildet ist und eine zweite Lufteintrittsöffnung 13 an der Mantelfläche des zylindrischen Abschnitts ausgebildet ist. Eine normal zur ersten Lufteintrittsöffnung 13 ausgerichtete Gerade 30 schneidet die Längsachse 12 des Einsatzes 3 unter einem Winkel 31 von im Wesentlichen 90°. Eine normal zur zweiten Lufteintrittsöffnung 13 ausgerichtete Gerade ist windschief zu der Längsachse 12 des Einsatzes 3 ausgerichtet. Beide Lufteintrittsöffnungen 13 sind im Sinne der Erfindung schräg zur Längsachse 12 des Einsatzes 3 ausgerichtet, also nicht normal zur Längsachse 12 des Einsatzes.

Ein Bohrkern kann auf dem abgewinkelten Abschnitt des Hohlzylinders anschlagen. In diesem Fall handelt es sich somit um einen im Wesentlichen als Gerade ausgebildeten Anschlag 10.

## Patentansprüche

1. Einsatz (1, 2, 3) für eine Bohrmaschine (4) mit: einem Befestigungsmittel (5) zur Befestigung des Einsatzes (1, 2, 3) an der Bohrmaschine (4), wenigstens einem Luftkanal (6), der durch Befestigung des Einsatzes (1, 2, 3) an der Bohrmaschine (4) in Fluidverbindung mit wenigstens einem luftführenden Abschnitt (7) der Bohrmaschine (4) bringbar ist und wenigstens einem Anschlag (8, 9, 10) für einen Bohrkern (11) oder Teile eines Bohrkerns, wobei der wenigstens eine Luftkanal (6) mit wenigstens einer Lufteintrittsöffnung (13) zur unmittelbaren Aufnahme von Bohrabrieb, welcher bei der Verwendung der Bohrmaschine (4) mit einem Hohlbohrer auftritt, verbunden ist, **dadurch gekennzeichnet dass** die wenigstens eine Lufteintrittsöffnung (13) schräg zur Längsachse (12) des Einsatzes (1, 2, 3) ausgerichtet ist, sodass immer ein Spalt vorhanden ist, über welchen Luft aus dem Bereich des Hohlbohrers angesaugt werden kann.

2. Einsatz (1, 2, 3) nach Anspruch 1, wobei der wenigstens eine Anschlag (8, 9, 10) an einem Träger (14, 15, 16) ausgebildet ist, in welchem der wenigstens eine Luftkanal (6) zumindest bereichsweise ausgebildet ist.

3. Einsatz (1, 2, 3) nach Anspruch 1 oder 2, wobei der wenigstens eine Anschlag (8, 9, 10) im Wesentlichen punktförmig, als Gerade oder als Fläche ausgebildet ist, vorzugsweise wobei die Fläche im Wesentlich normal zur Längsachse (12) des Einsatzes (1, 2, 3) ausgerichtet ist.

4. Einsatz (1, 2, 3) nach einem der Ansprüche 1 bis 3, wobei der Einsatz (1, 2, 3) einen kegelstumpfförmigen Abschnitt und/oder einen zylindrischen Abschnitt aufweist.

5. Einsatz (1, 2, 3) nach einem der Ansprüche 1 bis 4, wobei der wenigstens eine Luftkanal (6) zumindest bereichsweise koaxial zur Längsachse (12) des Einsatzes (1, 2, 3) ausgebildet ist.

6. Einsatz (1, 2, 3) nach einem der Ansprüche 1 bis 5, wobei eine normal zur wenigstens einen Lufteintrittsöffnung (13) ausgerichtete Gerade (30) die Längsachse (12) des Einsatzes (1, 2, 3) schneidet oder windschief zu dieser angeordnet ist.

7. Einsatz (1, 2, 3) nach einem der Ansprüche 1 bis 6, wobei der wenigstens eine Luftkanal (6) in drei seitlich am Einsatz (1, 2, 3) angeordnete Lufteintrittsöffnungen (13) mündet.

8. Einsatz (1, 2, 3) nach einem der Ansprüche 1 bis 7, wobei das Befestigungsmittel (5) zur Befestigung des Einsatzes (1, 2, 3) an der Bohrmaschine (4) als Gewinde ausgebildet ist.

9. Bohrmaschine (4) mit wenigstens einem luftführenden Abschnitt (7), einem Einsatz (1, 2, 3) nach einem der Ansprüche 1 bis 8, und einem zum Befestigungsmittel (5) des Einsatzes (1, 2, 3) korrespondierenden Gegenbefestigungsmittel (17).

10. Bohrmaschine (4) nach Anspruch 9, wobei der wenigstens eine luftführende Abschnitt (7) in Fluidverbindung mit einem Anschluss (18) für eine Absaugvorrichtung steht.

11. Bohrmaschine (4) nach Anspruch 9 oder 10, wobei der wenigstens eine luftführende Abschnitt (7) und das Gegenbefestigungsmittel (17) in bzw. an einem, vorzugsweise mit der Bohrmaschine (4) lösbar verbindbaren, Bohradapter (19) ausgebildet sind.

12. Bohrmaschine (4) nach Anspruch 11, wobei an dem Bohradapter (19) ein Befestigungsmittel (20) für einen Hohlbohrer (21) ausgebildet ist, vorzugsweise in Form eines Außengewindes.

## Claims

1. An insert (1, 2, 3) for a drilling machine (4) comprising: a fixing means (5) for fixing the insert (1, 2, 3) to the drilling machine (4), at least one air passage (6) which can be brought into fluid communication with at least one air-conveying portion (7) of the drilling machine (4) by fixing the insert (1, 2, 3) to the drilling machine (4), and at least one abutment (8, 9, 10) for a drilling core (11) or parts of a drilling core, wherein the at least one air passage (6) is connected to at least one air inlet opening (13) for directly receiving drilling chips which occur when using the drilling machine (4) with a hollow drill, **characterised in that** the at least one air inlet opening (13) is oriented inclinedly relative to the longitudinal axis (12) of the insert (1, 2, 3) so that there is always a gap, by way of which air can be sucked out of the region of the hollow drill.

2. An insert (1, 2, 3) according to claim 1 wherein the at least one abutment (8, 9, 10) is provided on a carrier (14, 15, 16), in which the at least one air passage (6) is at least region-wise provided.

3. An insert (1, 2, 3) according to claim 1 or claim 2 wherein the at least one abutment (8, 9, 10) is substantially in the form of a point, in the form of a straight line or in the form of a surface, preferably wherein the surface is oriented substantially normal to the longitudinal axis (12) of the insert (1, 2, 3).

4. An insert (1, 2, 3) according to one of claims 1 to 3 wherein the insert (1, 2, 3) has a frustoconical portion and/or a cylindrical portion.

5. An insert (1, 2, 3) according to one of claims 1 to 4 wherein the at least one air passage (6) is provided at least region-wise coaxially with respect to the longitudinal axis (12) of the insert (1, 2, 3).

6. An insert (1, 2, 3) according to one of claims 1 to 5 wherein a straight line (30) oriented normal to the at least one air inlet opening (13) intersects the longitudinal axis (12) of the insert (1, 2, 3) or is arranged in skewed relationship therewith.

7. An insert (1, 2, 3) according to one of claims 1 to 6 wherein the at least one air passage (6) opens into three air inlet openings (13) arranged laterally on the insert (1, 2, 3).

8. An insert (1, 2, 3) according to one of claims 1 to 7 wherein the fixing means (5) for fixing the insert (1, 2, 3) to the drilling machine (4) is in the form of a thread.

9. A drilling machine (4) having at least one air-guiding portion (7), an insert (1, 2, 3) according to one of claims 1 to 8 and a counter-fixing means (17) corresponding to the fixing means (5) of the inset (1, 2, 3).

10. A drilling machine (4) according to claim 9 wherein the at least one air-guiding portion (7) is in fluid communication with a connection (18) for a suction device.

11. A drilling machine (4) according to claim 9 or claim 10 wherein the at least one air-guiding portion (7) and the counter-fixing means (17) are provided in or on a drill adaptor (19) which can preferably be releasably connected to the drilling machine (4).

12. A drilling machine (4) according to claim 11 wherein provided on the drill adaptor (19) is a fixing means (20) for a hollow drill (21), preferably in the form of a male thread.

## Revendications

1. Insert (1, 2, 3) pour une perceuse (4) avec : un moyen de fixation (5) pour fixer l'insert (1, 2, 3) sur la perceuse (4), au moins un canal d'air (6) qui, par la fixation de l'insert (1, 2, 3) sur la perceuse (4), peut être mis en relation fluide avec au moins une section conduisant l'air (7) de la perceuse (4) et au moins une butée (8, 9, 10) pour une carotte (11) ou des parties d'une carotte, dans lequel le au moins un canal d'air (6) est relié à au moins une ouverture d'entrée de l'air (13) pour l'absorption directe de l'usure d'abrasion, laquelle apparait lors de l'utilisation de la perceuse (4) avec une mèche creuse, **caractérisé en ce que** la au moins une ouverture d'entrée de l'air (13) est orientée obliquement à l'axe longitudinal (12) de l'insert (1, 2, 3), de sorte qu'une fente est toujours présente, par laquelle de l'air peut être aspiré depuis la zone de la mèche creuse.

2. Insert (1, 2, 3) selon la revendication 1, dans lequel la au moins une butée (8, 9, 10) est conçue sur un support (14, 15, 16), dans lequel le au moins un canal d'air (6) est conçu au moins par endroits.

3. Insert (1, 2, 3) selon la revendication 1 ou 2, dans lequel la au moins une butée (8, 9, 10) est conçue essentiellement en forme de point, comme une ligne droite ou comme une surface, de préférence dans lequel la surface est orientée essentiellement perpendiculairement à l'axe longitudinal (12) de l'insert (1, 2, 3).

4. Insert (1, 2, 3) selon l'une des revendications 1 à 3, dans lequel l'insert (1, 2, 3) présente une section en cône tronqué et / ou une section cylindrique.

5. Insert (1, 2, 3) selon l'une des revendications 1 à 4, dans lequel le au moins un canal d'air (6) est conçu au moins par endroits de façon coaxiale à l'axe longitudinal (12) de l'insert (1, 2, 3).

6. Insert (1, 2, 3) selon l'une des revendications 1 à 5, dans lequel une ligne droite (30), orientée perpendiculairement à au moins une ouverture d'entrée d'air (13), coupe l'axe longitudinal (12) de l'insert (1, 2, 3) ou est disposée de façon inclinée par rapport à celui-ci.

7. Insert (1, 2, 3) selon l'une des revendications 1 à 6, dans lequel le au moins un canal d'air (6) débouche dans trois ouvertures d'entrée d'air (13) disposées latéralement sur l'insert (1, 2, 3).

8. Insert (1, 2, 3) selon l'une des revendications 1 à 7, dans lequel le moyen de fixation (5) destiné à fixer l'insert (1, 2, 3) sur la perceuse (4) est conçu comme un filetage.

9. Perceuse (4) avec au moins une section conduisant l'air (7), un insert (1, 2, 3) selon l'une des revendications 1 à 8, et un moyen de contre-fixation (17) correspondant au moyen de fixation (5) de l'insert (1, 2, 3).

10. Perceuse (4) selon la revendication 9, dans laquelle la au moins une section conduisant l'air (7) se trouve en relation fluide avec un raccordement (18) pour un dispositif d'aspiration.

11. Perceuse (4) selon la revendication 9 ou 10, dans laquelle la au moins une section conduisant l'air (7) et le moyen de contre-fixation (17) sont conçus dans ou sur un adaptateur de forage (19) pouvant être relié de façon détachable de préférence à la perceuse (4).

12. Perceuse (4) selon la revendication 11, dans laquelle un moyen de fixation (20) pour une mèche creuse (21) est conçu sur l'adaptateur de forage (19), de préférence en forme de filetage mâle.
